# EUROPÄISCHE PATENTSCHRIFT

(11) **EP 3 863 011 B1**
(45) Veröffentlichungstag und Bekanntmachung des Hinweises auf die Patenterteilung: **05.10.2022**
(21) Anmeldenummer: 20155891.3
(22) Anmeldetag: 06.02.2020
(51) Int. Cl.: G10K 11/172, F24F 13/24, F25D 23/00, F16L 55/033

(54) **KÜHLMÖBEL MIT SCHALLABSORBER**
REFRIGERATED CABINET WITH SOUND ABSORBER
MEUBLE FRIGORIFIQUE AVEC ABSORBEUR ACOUSTIQUE

(43) Veröffentlichungstag der Anmeldung: 11.08.2021
(73) Patentinhaber: Hauser GmbH, 4113 St. Martin (AT)
(72) Erfinder: Polaschek, Daniel, 4114 St. Martin im Mühlkreis (AT)
(74) Vertreter: Hübscher & Partner Patentanwälte GmbH

(56) Entgegenhaltungen:
- WO-A1-2019/009338
- DE-A1- 4 445 286
- JP-A- 2016 095 070

## Beschreibung

Die Erfindung bezieht sich auf ein Kühlmöbel mit einem zwischen einem Luftein- und einem Luftauslass angeordneten und einen Schallabsorber aufweisenden Strömungskanal, dessen Vorderwand dem Warenraum zugewandt ist und dessen Rückwand dieser Vorderwand gegenüberliegt.

WO 2019/009338 A1 offenbart Schallreduktion in Strömungskanälen, wobei ein Schallabsorber lediglich an einer Wand des Kanals angebracht ist.

JP 2016 095070 A offenbart einen Schalldämpfer in einem Strömungskanal, wobei sich der Dämpfer 25% quer zur Strömungsrichtung erstreckt.

Aus dem Stand der Technik sind Kühlmöbel mit Schallabsorbern zum Dämpfen von Luftschall in Strömungskanälen bekannt. Vor allem Schallabsorber, die den Luftschall durch Dissipation dämpfen, bei denen die Schallenergie also durch Reibung in thermische Energie umgewandelt wird, finden häufig Anwendung. Beispielsweise offenbart die DE4445286A1 ein Kältegerät, bei dem der vom Ventilator erzeugte Luftschall vom ebenfalls vom Ventilator erzeugten Luftstrom transportiert wird. Um den Luftschall zu dämpfen, werden Formteile in den Strömungspfad des Luftstromes eingesetzt, die durch Reibung den Luftschall absorbieren sollen. Zur Steigerung der Effizienz sind mehrere solcher Formteile vorgesehen, die zusätzlich zu ihrer schalldämpfenden Funktion den Luftstrom umlenken und an weiteren Formteilen vorbeiführen bevor der Luftstrom den schalldämpfenden Bereich verlässt.

Nachteilig an dem in der DE4445286A1 beschriebenen Prinzip ist allerdings, dass der Schallabsorber nicht nur die Schallenergie, sondern auch die Strömungsgeschwindigkeit des Luftstromes senkt und diesen zusätzlich streut. Außerdem kann eine Verbesserung der schalldämpfenden Eigenschaften bei gegebenem Material nur durch Vergrößerung der effektiven Oberfläche des Schallabsorbers, beispielsweise durch die Verwendung poröser Materialien, realisiert werden. Vergrößert man also den Schallabsorber, wird auch der Luftstrom stärker abgebremst und die Ventilatorleistung muss zum Ausgleich erhöht werden. Dies resultiert allerdings wieder in mehr emittierter Schallenergie. Zusätzlich muss bei Kältegeräten, wie in der DE4445286A1 offenbart, Tau berücksichtigt werden, der bei porösen Schallabsorbern zu einer Minderung der dämpfenden Eigenschaften führt. Dies macht eine einfache Zugänglichkeit und Austauschbarkeit des Schallabsorbers erforderlich, die konstruktiv oft nur schwer umzusetzen ist.

Der Erfindung liegt somit die Aufgabe zugrunde, ein Kühlmöbel mit einem Schallabsorber zum Dämpfen von Luftschall in einem Strömungskanal so auszugestalten, dass bei einfacher und leicht zugänglicher Ausgestaltung des Schallabsorbers der Luftstrom bei größtmöglicher Schalldissipation nur minimal verzögert wird.

Die Erfindung löst die gestellte Aufgabe dadurch, dass der Schallabsorber an der Vorder- oder Rückwand mit einer seiner größten Seitenflächen anliegt und sich quer zur Strömungsrichtung über 7 - 11%, vorzugsweise 8 - 9% des Strömungskanales erstreckt. Die Schalldämpfung erfolgt durch die Einleitung des schalltragenden Luftstromes in den Schallabsorber, wo der Luftschall dissipiert. Dabei soll die Oberfläche des Schallabsorbers, die mit dem Luftschall interagiert, möglichst groß sein, aber gleichzeitig die Luftgeschwindigkeit nur möglichst wenig gesenkt werden, um die größtmögliche Effizienz zu erreichen. Durch die Anordnung des Schallabsorbers wird der Schall entlang der Strömungsrichtung dissipiert, indem er von der dem Schallabsorber gegenüberliegenden Vorder- bzw. Rückwand des Strömungskanals in den Schallabsorber reflektiert wird. Da sich der Schallabsorber quer zur Strömungsrichtung über 7 - 11%, vorzugsweise 8 - 9% des Strömungskanales erstreckt, wird der Luftstrom dabei nur minimal umgelenkt. Versuche haben gezeigt, dass diese Dimensionierung die größtmögliche Schalldämmung bei minimaler Abbremsung des Luftstromes bewirkt. Um die effektive schallabsorbierende Oberfläche zu vergrößern, kann der Schallabsorber aus porösem Recyclingverbundschaum bestehen. Diese Recyclingverbundschäume sind schallabsorbierend und in verschiedenen Dichten und unterschiedlicher Porosität verfügbar, sodass die Dämpfungseigenschaften des Recyclingverbundschaumes auf die zu dämpfenden Frequenzbänder abgestimmt werden können.

Um die schalldämpfenden Eigenschaften des Schallabsorbers für längere Betriebszeiten aufrechtzuerhalten, wird vorgeschlagen, dass der Schallabsorber auf seiner dem Strömungskanal zugewandten Seite mit einer wasserundurchlässigen Beschichtung versehen ist. Im Betrieb des Kühlmöbels bildet sich im Bereich des Verdampfers zwangsläufig Kondenswasser, welches über den Luftstrom transportiert wird, sich auch auf dem Schallabsorber absetzt und die schalldämpfenden Eigenschaften dadurch mindert. Da der Schallabsorber üblicherweise aus porösem Material besteht, erhöht sich die Menge des aufgenommenen Kondenswassers durch die höhere Oberfläche und die vereinfachten Aggregationsbedingungen im Vergleich zu einer glatten Oberfläche zusätzlich. Durch die Beschichtung, beispielsweise mit einer wasserundurchlässigen Folie, kann das gesammelte Kondenswasser schlechter in den Schallabsorber eindringen, was zusätzlich die Gefahr von Schimmelbildung reduziert. In weiterer Folge kann das Kondenswasser durch die hydrophobe Wechselwirkung mit der Beschichtung leichter selbständig abfließen und gesammelt werden. Tests haben gezeigt, dass Polyurethan als Beschichtung bei einfacher Reinigbarkeit und Wasserundurchlässigkeit einen geringen Einfluss auf die akustischen Eigenschaften aufweist.

Um Kondenswasser rasch abzuführen, ohne die Schalldämmungseigenschaften zu mindern, wird vorgeschlagen, dass der Schallabsorber quer zur Strömungsrichtung 1-30° geneigt ist. Dadurch läuft Kondenswasser gezielter entlang der Kanten bzw. Ecken des Schallabsorbers ab und sammelt sich an einem tiefsten Sammelbereich, ohne das weitere bauliche Maßnahmen ergriffen werden müssen. Insbesondere eine quaderförmige Ausgestaltung des Schallabsorbers erweist sich als vorteilhaft, da durch diese Form Zuschnitte entfallen und durch die Neigung eine definierte, tiefste Kante festgelegt ist, an der sich das Kondenswasser sammelt und abfließt. Dadurch kann der Schallabsorber ausschließlich über die Schwerkraft hinreichend entfeuchtet werden, um seine schalldämmenden Eigenschaften aufrechtzuerhalten. Es hat sich dabei herausgestellt, dass die Neigung des Schallabsorbers seine schalldämmenden Eigenschaften nicht mindert. In einer besonders bevorzugten Ausführungsform der erfindungsgemäßen Vorrichtung ist unterhalb dieses Sammelbereich ein Abfluss für das Kondenswasser angeordnet.

Die feuchtkalte Umgebungsluft im Strömungskanal erschwert die Befestigung des Schallabsorber, weil gewöhnliche, günstige Klebstoffe nur eine unbeständige Verbindung zu der Vorder- oder Rückwand erlauben. Darüber hinaus besteht die Gefahr, dass Klebstoffe das Material des Schallabsorbers angreifen und dessen Schalldämmungseigenschaften vermindern. Um dennoch eine zuverlässige Befestigung und einen einfachen Austausch des Schallabsorbers zu ermöglichen, wird vorgeschlagen, dass der Schallabsorber über einen Rahmen an der anliegenden Vorder- oder Rückwand befestigt ist. Der Rahmen kann dabei vorzugsweise so ausgebildet sein, dass der befestigte Schallabsorber nicht oder nur wenig komprimiert wird, sodass seine Schallabsorptionsqualität erhalten bleibt.

Um eine Verminderung der Schallabsorptionseigenschaften durch die Befestigung weiter zu verhindern und dabei Kondenswasser rasch und zuverlässig abführen zu können, kann der Rahmen den Schallabsorber quer zu seinen größten Seitenflächen umschließen und von einer Abflussöffnung für Kondenswasser durchbrochen sein. Da die Schallabsorptionsqualität von der Dichte des verwendeten Materiales abhängt, können zufolge dieser Maßnahmen ein Kraftschluss und damit Klemmkräfte auf den Schallabsorber gänzlich entfallen, während der Rahmen eine Führungsrinne für das Kondenswasser bildet, das entlang des Rahmens zu einer nächstgelegenen Abflussöffnung geleitet wird. Der Rahmen kann dabei je nach Form und Ausgestaltung eine oder mehrere Abflussöffnungen aufweisen, die vorzugsweise im tiefstliegenden Sammelbereich für Kondenswasser angeordnet sind. Messungen haben gezeigt, dass der Rahmen die Schallentwicklung nicht negativ beeinflusst und daher nicht speziell strömungstechnisch optimiert werden muss.

Um gerade bei größeren Schallabsorbern das Strömungsverhalten innerhalb des Strömungskanales nicht negativ zu beeinflussen, wird vorgeschlagen, dass der Schallabsorber mit einer quer über den Schallabsorber verlaufenden Strebe rückgehalten ist. Demzufolge kann ein Ausbauchen des Schallabsorbers aufgrund der Materialspannung in den Luftkanal, insbesondere bei der erfindungsgemäßen Befestigungsform, vermieden werden. Darüber hinaus wird aber auch eine erhöhte Aufnahme von Kondenswasser im ausgebauchten Bereich verhindert, sodass eine längere Standzeit erreicht werden kann. Die Strebe muss allerdings so ausgestaltet sein, dass sie einerseits den Schallabsorber nicht absorbtionsmindernd komprimiert und andererseits das Strömungsverhalten im Luftkanal nicht wesentlich beeinflusst.

Um die Effizienz des Kühlprozesses als auch der Schalldämmung zu verbessern, kann der Schallabsorber im Strömungskanal einem Verdampfer in Strömungsrichtung nachgelagert sein. Dadurch kann der Verdampfer unmittelbar einem schallemittierenden Gebläse nachgelagert werden, sodass eine verwirbelungsfreie Anströmung der einzelnen Kühlrippen des Verdampfers ermöglicht wird. Die Schallemissionen des Gebläses können dabei auch nach dem Verdampfer ausreichend mit dem Schallabsorber gedämpft werden, wobei es für die verwirbelungsfreie Anströmung der Kühlrippen im Bereich des Verdampferausganges vorteilhaft ist, wenn der Schallabsorber dem Verdampfer mit Abstand nachgelagert ist, wodurch auch eine einfache Abführung des Kondenswassers vom Schallabsorber ermöglicht werden kann.

Ein guter Kompromiss zwischen maximaler Schalldämmung und minimaler Beeinflussung der Strömungseigenschaften im Luftkanal kann erreicht werden, wenn sich die größte Seitenfläche des Schallabsorbers über 30 - 73% des geraden, einbaufreien Teiles der anliegenden Vorder- oder Rückwand erstreckt. Versuche mit Schallabsorbern in verschiedenen Größen haben gezeigt, dass bei Überschreitung der maximalen relativen Größe keine signifikant höhere Schalldämmung erreicht wird und es darüber hinaus aufgrund der zu geringen verbleibenden einbaufreien Flächen an der anliegenden Vorder- oder Rückwand zu Verwirbelungen im Luftstrom kommt. Zu geringe Ausdehnungen liefern keine hinreichende Schalldämmung.

Der Warenraum kann einfach vorderwandseitig gekühlt werden, wenn die Vorderwand des Strömungskanals zumindest abschnittsweise Durchbrüche in den Warenraum aufweist. Durch diese Durchbrüche kann der Warenraum direkt mittels der gekühlten Luft aus dem Strömungskanal gekühlt werden. Dadurch kann mit einfachen baulichen Maßnahmen warme Luft aus dem Warenraum verdrängt und in den Kühlkreislauf eingeleitet werden, was zu einer verbesserten Kühlung der Waren, insbesondere in Kombination mit einem Entnahmeöffnungsseitigen Luftschleier, verbessert werden kann. Eine Erhöhung des Schallpegels durch die Durchbrüche ist dann nicht gegeben, wenn das Kühlmöbel betriebsgemäß mit Waren befüllt ist, da diese den Schall ebenfalls dämpfen.

Die Schallemission kann bereits vor der Schalldämmung minimiert werden, indem im Strömungskanal ein Ventilator vorgesehen ist, dessen Laufrad um 1-5° zur Strömungsrichtung geneigt ist. Durch diese Anordnung kann nicht nur ein entsprechend großes Laufrad bei geringen Drehzahlen zum Einsatz kommen, sondern der minimale und der maximale Abstand zwischen den Ventilatorschaufeln und der Vorder- oder Rückwand variiert nur gering, sodass insgesamt eine geringere Luftverwirbelung und eine geringere Schallemission erreicht wird. Insbesondere kann mit der erfindungsgemäßen Anordnung der Durchmesser des Laufrades den kleinsten Querschnittsdurchmesser des Strömungskanales übersteigen.

Um eine noch bessere Schalldämpfung zu ermöglichen, können die entgegen der Strömungsrichtung abgegebenen Schallemissionen mit einem dem Ventilator im Strömungskanal vorgelagerten zweiten Schallabsorber vermindert werden.

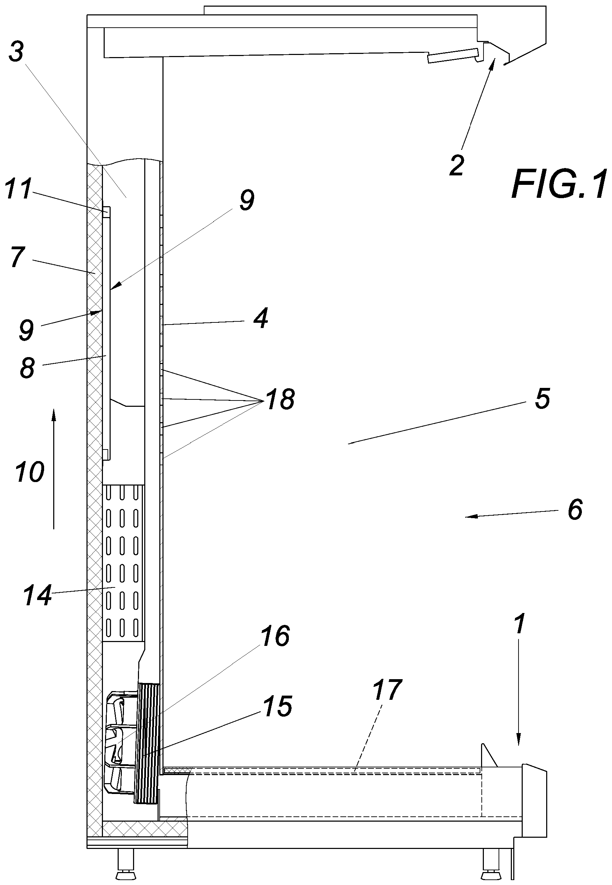

In der Zeichnung ist der Erfindungsgegenstand beispielsweise dargestellt. Es zeigen
- Fig. 1: eine aufgerissene Seitenansicht des Kühlmöbels mit einem Teilschnitt entlang des Strömungskanales und quer zur größten Seitenfläche des Schallabsorbers und
- Fig. 2: einen Schnitt des Kühlmöbels parallel zur größten Seitenfläche des Schallabsorbers.

Ein erfindungsgemäßes Kühlmöbel umfasst einen Lufteinlass 1 und einen Luftauslass 2 mit einem zwischenliegenden Strömungskanal 3. Die Vorderwand 4 des Strömungskanals 3 ist dabei einem Warenraum 5 zugewandt, in dem die gekühlten Waren gelagert und über eine Entnahmeöffnung 6 zugänglich sind. Der Strömungskanal 3 wird auf der der Vorderwand 4 gegenüberliegenden Seite von einer Rückwand 7 begrenzt, die wärmedämmend ausgeführt sein kann.

Innerhalb des Strömungskanals 3 ist ein Schallabsorber 8 angeordnet, der mit einer seiner größten Seitenflächen 9 an der Rückwand 7 anliegt. Der Schallabsorber 8 erstreckt sich dabei quer zu einer Strömungsrichtung 10 über 7 - 11%, vorzugsweise 8 - 9 % der Querschnittsfläche des Strömungskanals 3, wobei sich die größte Seitenfläche 9 des Schallabsorbers 8 über 30 - 73% des geraden, einbaufreien Teiles der anliegenden Rückwand 7 erstreckt. Freilich kann der Schallabsorber 8 in analoger Weise auch an der Vorderwand 4 angeordnet werden.

In einer bevorzugten Ausführungsform kann der Schallabsorber 8 mit einer in der Zeichnung nicht näher dargestellten wasserundurchlässigen Beschichtung, beispielsweise aus Polyurethan beschichtet sein.

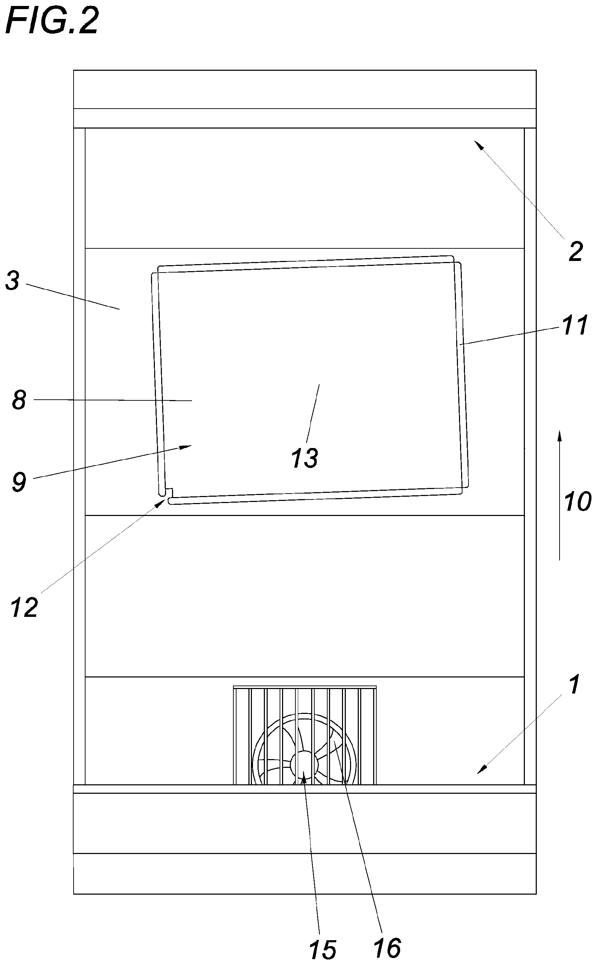

Um das Abfließen von Kondenswasser zu begünstigen, kann der Schallabsorber 8 quer zur Strömungsrichtung 10 um 1 - 30° geneigt sein, wie dies insbesondere der Fig. 2 entnommen werden kann. Obwohl grundsätzlich unterschiedliche Befestigungsmöglichkeiten für den Schallabsorber 8 möglich sind, ergeben sich besonders einfache Fertigungsbedingungen, wenn der Schallabsorber 8 über einen Rahmen 11 an der Rückwand 7 befestigt ist, wobei der Rahmen 11 den Schallabsorber 8 quer zu seinen größten Seitenflächen 9 zumindest abschnittsweise umschließen und von einer Abflussöffnung 12 für Kondenswasser durchbrochen sein kann. Diese Abflussöffnung 12 befindet sich vorzugsweise im tiefstliegenden Bereich des Rahmens 11, also bei einem quaderförmigen Schallabsorber 8 vorzugsweise an der tiefstliegenden Kante. In einer besonders einfachen Ausführungsform kann die Abflussöffnung 12 durch einen nicht vollständig geschlossenen Rahmen 11 gebildet werden.

Um eine negative Beeinflussung der Luftströmung im Strömungskanal 3 zu vermeiden, kann eine Ausbauchung des Schallabsorbers 8 durch eine quer über den Schallabsorber und vorzugsweise am Rahmen abgestützte Strebe 13 verhindert werden.

Um gute Strömungsbedingungen innerhalb eines im Strömungskanal 3 angeordneten Verdampfers 14 zu schaffen, wird vorgeschlagen, dass der Schallabsorber 8 im Strömungskanal 3 dem Verdampfer 14 in Strömungsrichtung 10 nachgelagert und vorzugsweise zur Vermeidung von Verwirbelungen im Luftaustrittsbereich des Verdampfers 14 von diesem beabstandet ist.

Der Warenraum 5 kann gekühlt werden, indem über Durchbrüche 18 in der Vorderwand 4 warme Luft aus dem Warenraum 5 in den Strömungskanal 3 eingeleitet wird. Die Durchbrüche 18 erhöhen den Schallpegel nicht, wenn der Warenraum 5 mit Waren bestückt ist, da diese den Schall ebenfalls dämpfen.

Um Schallemissionen nicht nur besser dämpfen, sondern bereits deren Entstehung verringern zu können, kann im Strömungskanal 3 ein Ventilator 15 vorgesehen sein, dessen Laufrad 16 um 1-5° zur Strömungsrichtung 19 geneigt ist. Dieser Ventilator 15 kann vorzugsweise als Radialventilator ausgeführt und dem Verdampfer 14 in Strömungsrichtung 10 vorgelagert sein.

Ist dem Ventilator 15 im Strömungskanal 3 ein weiterer Schallabsorber 17 vorgelagert, kann der Schall auch entgegen der Strömungsrichtung 10 gedämpft werden.

## Patentansprüche

1. Kühlmöbel mit einem zwischen einem Luftein- (1) und einem Luftauslass (2) angeordneten und einen Schallabsorber (8) aufweisenden Strömungskanal (3), dessen Vorderwand (4) dem Warenraum (5) des Kühlmöbels zugewandt ist und dessen Rückwand (7) dieser Vorderwand (4) gegenüberliegt, **dadurch gekennzeichnet, dass** der Schallabsorber (8) an der Vorder-(4) oder Rückwand (7) mit einer seiner größten Seitenflächen (9) anliegt und sich quer zur Strömungsrichtung (10) über 7 - 11%, vorzugsweise 8 - 9% der Querschnittsfläche des Strömungskanales (3) erstreckt.

2. Kühlmöbel nach Anspruch 1, **dadurch gekennzeichnet, dass** der Schallabsorber (8) auf seiner dem Strömungskanal (3) zugewandten Seite mit einer wasserundurchlässigen Beschichtung versehen ist.

3. Kühlmöbel nach einem der Ansprüche 1 bis 2, **dadurch gekennzeichnet, dass** der Schallabsorber (8) quer zur Strömungsrichtung (10) 1 -30° geneigt ist.

4. Kühlmöbel nach einem der Ansprüche 1 bis 3, **dadurch gekennzeichnet, dass** der Schallabsorber (8) über einen Rahmen (11) an der anliegenden Vorder-(4) oder Rückwand (7) befestigt ist.

5. Kühlmöbel nach Anspruch 4, **dadurch gekennzeichnet, dass** der Rahmen (11) den Schallabsorber (8) quer zu seinen größten Seitenflächen (9) umschließt und dass der Rahmen (11) von einer Abflussöffnung (12) für Kondenswasser durchbrochen ist.

6. Kühlmöbel nach einem der Ansprüche 1 bis 5, **dadurch gekennzeichnet, dass** der Schallabsorber (8) mit einer quer über den Schallabsorber (8) verlaufenden Strebe (13) rückgehalten ist.

7. Kühlmöbel nach einem der Ansprüche 1 bis 6, **dadurch gekennzeichnet, dass** der Schallabsorber (8) im Strömungskanal (3) einem Verdampfer (14) in Strömungsrichtung (10) nachgelagert ist.

8. Kühlmöbel nach einem der Ansprüche 1 bis 7, **dadurch gekennzeichnet, dass** sich die größte Seitenfläche (9) des Schallabsorbers (8) über 30 - 73% des geraden, einbaufreien Teiles der anliegenden Vorder-(4) oder Rückwand (7) erstreckt.

9. Kühlmöbel nach einem der Ansprüche 1 bis 8, **dadurch gekennzeichnet, dass** die Vorderwand (4) zumindest abschnittsweise Durchbrüche (18) in den Warenraum (5) aufweist.

10. Kühlmöbel nach einem der Ansprüche 1 bis 9, **dadurch gekennzeichnet, dass** im Strömungskanal (3) ein Ventilator (15) vorgesehen ist, dessen Laufrad (16) um 1-5° zur Strömungsrichtung (10) geneigt ist.

11. Kühlmöbel nach Anspruch 10, **dadurch gekennzeichnet, dass** dem Ventilator (15) im Strömungskanal (3) ein zweiter Schallabsorber (17) vorgelagert ist.

## Claims

1. Refrigerated cabinet comprising a flow channel (3) arranged between an air inlet (1) and an air outlet (2) and having a sound absorber (8), the front wall (4) of which flow channel faces the goods space (5) of the refrigerated cabinet and the rear wall (7) of which flow channel is located opposite this front wall (4), **characterised in that** the sound absorber (8) lies against the front wall (4) or rear wall (7) with one of its largest side surfaces (9) and extends transversely to the flow direction (10) over 7-11%, preferably 8-9%, of the cross-sectional area of the flow channel (3).

2. Refrigerated cabinet as claimed in claim 1, **characterised in that** the sound absorber (8) is provided with a water-impermeable coating on its side facing the flow channel (3).

3. Refrigerated cabinet as claimed in any one of claims 1 to 2, **characterised in that** the sound absorber (8) is inclined 1-30° transversely to the flow direction (10).

4. Refrigerated cabinet as claimed in any one of claims 1 to 3, **characterised in that** the sound absorber (8) is fastened to the adjacent front wall (4) or rear wall (7) via a frame (11).

5. Refrigerated cabinet as claimed in claim 4, **characterised in that** the frame (11) encloses the sound absorber (8) transversely to its largest side surfaces (9) and **in that** the frame (11) is pierced by a drainage opening (12) for condensation water.

6. Refrigerated cabinet as claimed in any one of claims 1 to 5, **characterised in that** the sound absorber (8) is retained by a strut (13) which extends transversely over the sound absorber (8).

7. Refrigerated cabinet as claimed in any one of claims 1 to 6, **characterised in that** the sound absorber (8) in the flow channel (3) is arranged downstream of an evaporator (14) in the flow direction (10).

8. Refrigerated cabinet as claimed in any one of claims 1 to 7, **characterised in that** the largest side surface (9) of the sound absorber (8) extends over 30-73% of the straight, installation-free part of the adjacent front wall (4) or rear wall (7).

9. Refrigerated cabinet as claimed in any one of claims 1 to 8, **characterised in that** at least sections of the front wall (4) have apertures (18) into the goods space (5).

10. Refrigerated cabinet as claimed in any one of claims 1 to 9, **characterised in that** in the flow channel (3) a fan (15) is provided, the impeller (16) of which is inclined by 1-5° with respect to the flow direction (10).

11. Refrigerated cabinet as claimed in claim 10, **characterised in that** a second sound absorber (17) is arranged upstream of the fan (15) in the flow channel (3).

## Revendications

1. Meuble frigorifique avec un canal d'écoulement (3) disposé entre une entrée d'air (1) et une sortie d'air (2) et comportant un amortisseur de bruit (8), dont la paroi avant (4) est orientée vers le compartiment à marchandises (5) du meuble frigorifique et dont la paroi arrière (7) est opposée à cette paroi avant (4), **caractérisé en ce que** l'amortisseur de bruit (8) s'appuie contre la paroi avant (4) ou arrière (7) avec une de ses plus grandes surfaces latérales (9) et s'étend transversalement à la direction d'écoulement (10) sur 7 à 11%, de préférence 8 à 9% de la surface transversale du canal d'écoulement (3).

2. Meuble frigorifique selon la revendication 1, **caractérisé en ce que** l'amortisseur de bruit (8) est doté sur sa face orientée vers le canal d'écoulement (3) d'un revêtement étanche à l'eau.

3. Meuble frigorifique selon une des revendications 1 à 2, **caractérisé en ce que** l'amortisseur de bruit (8) est incliné de 1 à 30° par rapport à la direction d'écoulement (10).

4. Meuble frigorifique selon une des revendications 1 à 3, **caractérisé en ce que** l'amortisseur de bruit (8) est fixé par un cadre (11) à la paroi d'appui avant (4) ou arrière (7).

5. Meuble frigorifique selon la revendication 4, **caractérisé en ce que** le cadre (11) entoure l'amortisseur de bruit (8) transversalement à ses plus grandes surfaces latérales (9) et que le cadre (11) est percé par un orifice d'écoulement (12) pour l'eau de condensation.

6. Meuble frigorifique selon une des revendications 1 à 5, **caractérisé en ce que** l'amortisseur de bruit (8) est retenu avec un étai (13) courant transversalement sur l'amortisseur de bruit (8).

7. Meuble frigorifique selon une des revendications 1 à 6, **caractérisé en ce que** l'amortisseur de bruit (8) est monté dans le canal d'écoulement (3) en aval d'un évaporateur (14) dans la direction d'écoulement (10).

8. Meuble frigorifique selon une des revendications 1 à 7, **caractérisé en ce que** la plus grande surface latérale (9) de l'amortisseur de bruit (8) s'étend sur 30 à 73% de la partie droite et exempte d'installation de la paroi d'appui avant (4) ou arrière (7).

9. Meuble frigorifique selon une des revendications 1 à 8, **caractérisé en ce que** la paroi avant (4) présente au moins par sections des ouvertures (18) dans le compartiment à marchandises (5).

10. Meuble frigorifique selon une des revendications 1 à 9, **caractérisé en ce que** dans le canal d'écoulement (3) est prévu un ventilateur (15) dont l'hélice (16) est inclinée de 1 à 5° par rapport à la direction d'écoulement (10).

11. Meuble frigorifique selon la revendication 10, **caractérisé en ce qu'**un deuxième amortisseur de bruit (17) est monté en amont du ventilateur (15) dans le canal d'écoulement (3).
